# EUROPEAN PATENT APPLICATION

(11) **EP 2 051 100 A1**
(43) Date of publication of application: **22.04.2009**
(21) Application number: 07118875.9
(22) Date of filing: 19.10.2007
(51) Int. Cl.: G01S 7/285, G01S 13/18, G01S 13/56

(54) **A method and system for presence detection**

(71) Applicant: Ford Global Technologies, LLC, Dearborn, MI 48126 (US)
(72) Inventor: Svedoff, Göran, 427 37 Billdal (SE); Antonsson, Anders, 421 41 Västra Frölunda (SE)
(74) Representative: Bergquist, Kjell Gunnar

(57) **Abstract**

The invention relates to a method for presence control within a predetermined detection volume (4) using an arrangement (2) for transmitting and receiving microwave radiation, said method comprising: periodically actuating a microwave transmitter (6); detecting microwave radiation within said detection volume (4) by means of a microwave receiver (15); and determining whether a living human (5) or animal is present in said detection volume (4) based on the properties of the microwave radiation being received by said microwave receiver (15). The method furthermore comprises: periodically actuating said microwave receiver (15); bringing said receiver (15) to enter an active state a predetermined time period (L_{T2}) after said transmitter (6) enters a non-active state, and said predetermined time period (L_{T2}) corresponding to a time period for emitted microwave radiation to reach the outer perimeter (4a) of the detection volume (4) and to reach said receiver (15) if reflected by said human (5) or animal. The invention also relates to a system for presence detection.

## Description

### TECHNICAL FIELD:

The present invention relates to a method for presence control within a predetermined detection volume using an arrangement for transmitting and receiving microwave radiation, said method comprising: periodically actuating a microwave transmitter; detecting microwave radiation within said detection volume by means of a microwave receiver; and determining whether a living human or animal is present in said detection volume based on the properties of the microwave radiation being received by said microwave receiver.

The present invention also relates to a system for presence detection within a predetermined detection volume comprising a microwave-based transmitting and receiving unit, said system also comprising: a first pulse length generator for periodically actuating a microwave transmitter; a microwave receiver for detecting microwave radiation within said detection volume, said microwave receiver being arranged for determining whether a living human or animal is present in said detection volume based on the microwave radiation being received.

### STATE OF THE ART:

Systems for detection of the presence of humans and animals in a defined area or space are well-known and are commonly used, for example as intrusion detection systems. With regard to vehicles, for example, it is common today to use intrusion detectors in order to provide an alarm in the event that the presence of a human or an animal is detected within the passenger compartment of the vehicle. In this manner, it can be expected that the risk for theft of the vehicle can be decreased.

A system for presence detection in a vehicle may comprise a combined radio transmitter and receiver based on microwave technology, which means that the radio transmitter is arranged for emitting microwave radiation into a specified space corresponding to the vehicle's passenger compartment. Furthermore, the receiver is arranged for detecting any microwave radiation which is reflected as a result of humans or animals being present in said space. In order to achieve this, it is previously known to use microwave-based detection units of the so-called Doppler motion sensor type. Such units are based on the Doppler shift phenonomenon in order to detect motion of humans and animals in a space.

Regarding prior art, it can be noted that the patent document US 6426716 teaches a motion sensor based on a microwave transceiver apparatus. The apparatus comprises a transmit pulse generator being arranged to control the length of the pulses, and thereby the range of the transceiver.

In the field of intrusion detection, especially in vehicle intrusion detectors, there exists a problem in that intrusion should only be detected in a very well-defined space, i.e. corresponding to a well-defined distance from the detector. This means that the components which are used, in particular for the microwave transmitter and receiver, must be very accurate and of high quality so that the detection sphere can be defined in an exact manner within the vehicle. Otherwise, there will be a risk for false alarms if for example a person or animal passes just outside of the detection sphere. Such false alarms are of course unwanted.

Consequently, according to prior art it is difficult to provide an intrusion detection system having precisely defined boundaries for the detection sphere. This means that unwanted false alarms may occur, which is a disadvantage. For this reason, there is a demand for improved systems arranged for precisely regulating the detection boundaries around an intrusion detector - which means that false alarms can be minimized or preferably eliminated - while still using components and circuit solutions at a relatively low cost.

### SUMMARY OF THE INVENTION:

Consequently, an object of the present invention is to provide a system and method for intrusion detection in which the above-mentioned drawbacks can be overcome, in particular so as to obtain a cost-effective and simple system and method but generally without any risk for false alarms.

This object is achieved by means of a method of the type mentioned initially which comprises: periodically actuating said microwave receiver; bringing said receiver to enter an active state a predetermined time period after said transmitter enters a non-active state, and said predetermined time period corresponding to a time period for emitted microwave radiation to reach the outer perimeter of the detection volume and to reach said receiver if reflected by said human or animal.

The object is also achieved by means of a system of the kind mentioned initially which comprises a further pulse generator adapted for periodically actuating said microwave receiver by means of a sequence of further pulses each having a predetermined pulse length and for setting further pulses in an active state a predetermined time period after said first pulses enter a non-active state, wherein said predetermined time period corresponds to a time period for emitted microwave radiation to reach the outer perimeter of the detection volume and to reach said receiver if reflected by said human or animal.

By means of the invention, certain advantages are obtained. Firstly, it can be noted that the invention provides an intrusion detector with sharply defined boundaries of the detection volume around the sensor. By precisely regulating the detection boundaries of the detection sphere in the manner stated above, detection is totally avoided outside the perimeter of the detection sphere. This drastically reduces the influence by objects, moving or not, outside the detection boundaries, which are often the cause of false alarms.

The invention is suitably intended to be used with an intrusion detector of the type which is based on the Doppler effect on transmitted microwave radiation.

### BRIEF DESCRIPTION OF THE DRAWINGS:

The invention will now be described in more detail with reference to a preferred exemplary embodiment and to the attached drawings, in which:
- Fig. 1: is a schematical drawing of a vehicle being equipped with an arrangement in accordance with the present invention;
- Fig. 2: is a schematic block diagram showing the design of an arrangement in accordance with an embodiment of the invention; and
- Fig. 3: is a diagram showing a sequence involving a number of timing pulses, said sequence illustrating the principles of the invention.

### PREFERRED EMBODIMENT:

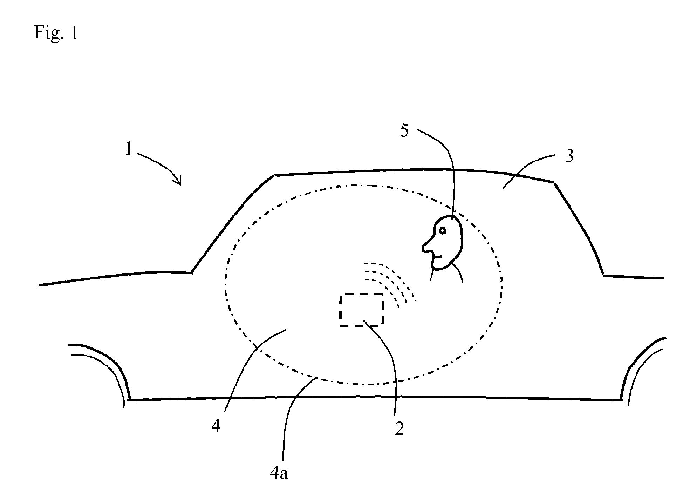

With reference to Fig. 1, there is shown a simplified schematical drawing of a part of a vehicle 1 which is equipped with a system for presence detection according to the principles of the present invention. More precisely, Fig. 1 shows a mid section of a conventional passenger car 1. As shown in a schematical manner, the car 1 is provided with a transmitter and receiver unit 2 for presence detection which is preferably positioned in a central part of the car's 1 passenger compartment 3. More precisely, the transmitter and receiver unit 2 is suitably located between the two front seats (not shown) of the vehicle, for example in a console which is mounted to the floor of the car 1.

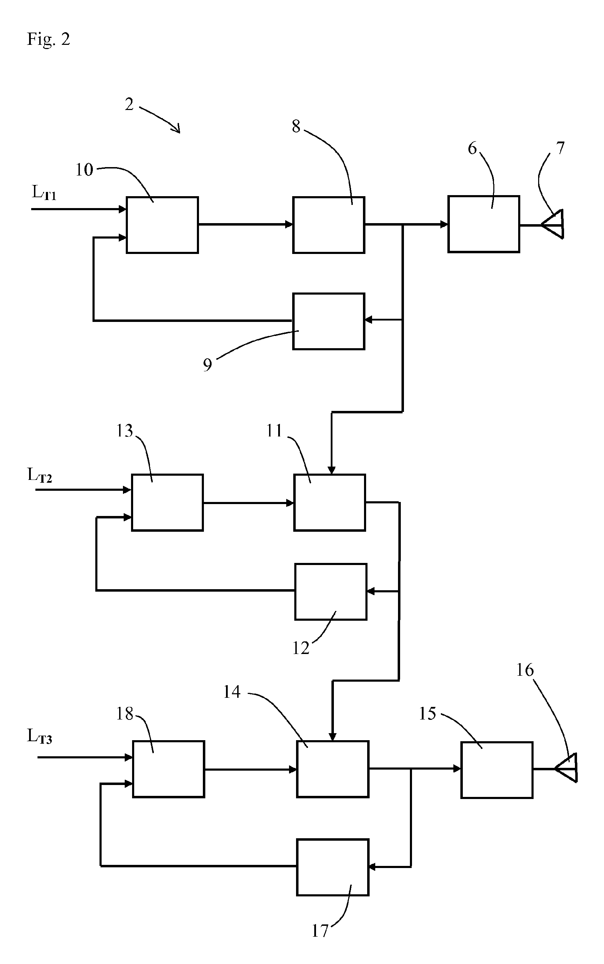

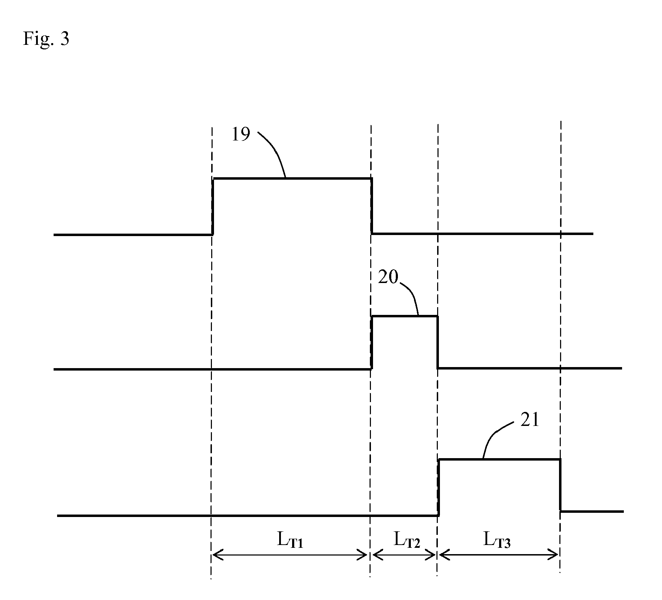

As will be described in greater detail below, the transmitter and receiver unit 2 comprises a microwave transmitter which is arranged for transmitting microwave radiation into the passenger compartment 3. As illustrated in a schematical manner in Fig. 1, the microwave radiation is emitted into a predetermined presence detection volume 4, i.e. a generally spherical "bubble" having dimensions and being positioned so as to correspond to a predetermined part of the passenger compartment of the car 1 in which the presence of a living human person (or animal) is to be detected. Such a person is illustrated in a simplified manner by means of reference numeral 5 in Fig. 1. To achieve such detection, the transmitter and receiver unit 2 is arranged in a manner which now will be described in detail with reference to Figs. 2 and 3.

Fig. 2 is a schematical diagram of the transmitter and receiver unit 2, which comprises a microwave transmitter 6 and an associated transmitter antenna 7. The microwave transmitter 6 is arranged for feeding the transmitter antenna 7 so as to emit radiation generally in the microwave range. The operation of a microwave transmitter and receiver for the purpose of presence detection in a given zone or sphere is known as such, and for this reason it is not described in detail here. A previously used microwave-based detection unit is the so-called Dopplar motion sensor type.

The transmitter and receiver unit 2 comprises a first pulse generator 8 which is arranged so as to produce a series of pulses each having a predetermined target pulse length L_{T1}. The first pulse generator 8 is connected to the transmitter 6, which means that the pulses are used to control the operation of the microwave transmitter 6 in accordance with these pulses. More precisely, the microwave transmitter 6 is arranged to emit a burst of microwave radiation when each pulse is in its active state. Also, a first pulse length detector 9 is provided for measuring the actual pulse length duration L_{A1} of each of these pulses, i.e. at the output of the first pulse generator 8, and for producing a measurement value representing said actual pulse length duration L_{A1}. This measurement value is fed to a first comparator 10.

The first comparator 10 is arranged for comparing the actual pulse length L_{A1} from the first pulse generator 8 with the pre-determined target pulse length L_{T1} and for producing a control signal which is fed from the first comparator's 10 output to the first pulse generator 8. This means that a signal representing the target pulse length L_{T1} to be generated by means of the first pulse generator 8 is fed to one of the inputs of the first comparator 10, whereas a signal representing the actual value as measured by means of the first pulse length detector 9 is fed to the other input of the first comparator 10. This is a control process which aims at producing pulses to control the transmitter 6 having a length which is as close to the predetermined target value L_{T1} as possible and having a very high level of accuracy.

Consequently, and as indicated in Fig. 2, a series of pulses is generated in the first pulse generator 8 and is used to activate the transmission of microwave radiation by means of the transmitter 6 and the associated antenna 7. However, a pulse generated by the first pulse generator 8 is also used to trigger a second pulse generator 11, which in turn will generate a second series of pulses, each having a second target pulse length L_{T2}. Preferably, the second pulse is triggered when the first pulse changes from its active to its non-active state. The output of the second pulse generator 11 is connected to a second pulse length detector 12, which is arranged for measuring the actual second pulse length duration L_{A2}, and for producing a measurement value which is fed to a second comparator 13.

In a manner which corresponds to the first comparator 10, the second comparator 13 is arranged for comparing the actual second pulse length L_{A2} from the second pulse generator 11 with the pre-determined second target pulse length L_{T2} and for producing a suitable control signal to the second pulse generator 11 depending on any occuring difference between these signals. To this end, the target value L_{T2} for the second pulse length (to be generated by means of the second pulse generator 11 is fed to one of the inputs of the second comparator 13, whereas a measurement (from the second pulse length detector 12) is fed to the other input of the second comparator 13.

The purpose of the second pulse is to define a short "time gap" immediately after the transmission of a burst of microwave radiation by means of the transmitter 6. The duration of this time gap corresponds generally to the time it takes for this burst of microwave radiation to reach the perimeter 4a (cf.
Fig. 1), i.e. the outer edge of the the detection volume 4, plus the time it takes for any microwave radiation reflected on the person 5 to be transmitted back to the transmitter and receiver unit 2 so as to be received. This principle will now be described in greater detail with further reference to Fig. 2.

As shown in Fig. 2, the second pulse which is generated by means of the second pulse generator 11 will also be used in order to trigger a further, third pulse generator 14. Preferably, the third pulse is triggered when the second pulse changes from its active to its non-active state. This means that the third pulse generator 14 is arranged for generating a series of third pulses each having a third target pulse length L_{T3}. Such a third pulse is used for actuating a microwave receiver 15, which is furthermore associated with a receiver antenna 16.

In other words, after the first pulse, i.e. when the transmitter 6 is actuated, and after the second pulse (the length of which corresponds to a time gap for the emitted microwave radiation to reach the outer perimeter 4a of the detection volume 4 and to return if reflected), the third pulse is used to actuate the receiver 15 in order to detect any reflected microwave radiation occurring at the receiver antenna 16 after this time gap has passed.

In a manner which corresponds to the first comparator 10 and second comparator 13, the third comparator 18 is arranged for comparing the actual third pulse length L_{A3} from the third pulse generator 14 with the predetermined third target pulse length L_{T3} and for producing a suitable signal to the third pulse generator 14 depending on the difference between these signals. To this end, the target value L_{T3} for the third pulse length is fed to one of the inputs of the third comparator 18, whereas a measurement from a third pulse length detector 17 (being connected to the output of the third pulse generator 14) is fed to the other input of the third comparator 18.

Consequently, when the receiver 15 is active - which occurs during the active state of the third pulse - microwave radiation is received by said receiver 15. The receiver 15 is connected to a (not shown) detection circuit which is arranged for determining whether presence is to be detected. As mentioned above, such detection is previously known as such, and could be of the Doppler shift type which is arranged for deciding whether there is any presence in the detection sphere 4 based on the received microwave radiation.

The three different target pulse lengths L_{T1}, L_{T2}, L_{T3} are chosen according to requirements relating to the size of the detection sphere 4 and the desired accuracy during presence detection. This means that these target values may be configurable depending on which vehicle type the system is fitted to. This allows for a generic configurable intrusion detector which can easily be adapted to different types of vehicles.

The principles of the invention will now be further explained with reference to Fig. 3, which shows a timing sequence involving a first pulse 19, a second pulse 20 and a third pulse 21, as explained above. As mentioned above, the first pulse 19 has a predefined first target length L_{T1} which corresponds to a time during which microwave radiation is emitted into the detection volume 4, i.e. a time during which the transmitter 6 is activated so that the microwave radiation may reach a the person 5 being present within the detection volume 4.

When the first pulse 19 terminates, a second pulse 20 will be activated by means of the second pulse generator 11 as described above. This second pulse 20 constitutes a "pause" which corresponds to a certain time span from the termination of the first pulse 19 and until any microwave radiation which is reflected by the person 5 can be expected to be reflected and to reach the receiver antenna 15. At the termination of the second pulse 20, the third pulse 21 is activated, which corresponds to actuation of the microwave receiver 15. At this stage, it will be possible to detect any occuring presence in the detection volume 4.

As described above, the three pulses 19, 20, 21 are controlled by means of the pulse length detectors 9, 12, 17 and the comparators 10, 13, 18. These control circuits assure that the target pulse lengths L_{T1}, L_{T2}, L_{T3} are maintained at their desired values with a high degree of accuracy.

The duration of the transmitter-on interval, i.e. the active state of the first pulse 19, determines how far from the detector that detection is possible. The duration and position of the receiver-on interval in relation to the transmitter-on interval also determine the near detection interval.

Having the possibility of precisely setting the transmitter and receiver on-off signals enables a very precise control of the outer and near detection boundaries, i.e. the radius of the detection volume 4.

This invention enables the use of components in a pulse generator that has wider tolerances, less influence by temperature, ageing and other variables, which means less costly components. This can be achieved while still achieving good precision during presence detection according to the invention. Without this invention, achieving good precision would require a costly selection of low tolerance components or supplier calibration procedures, and component variation will have a considerable effect on the system.

The invention is not limited to the embodiment described above, but may be modified without departing from the scope of the claims below. For example, the invention can be used in different types of vehicles, for example load-carrying trucks, buses, boats and other types of vehicles and vessels.

The invention can be used for intrusion detection for vehicles such as cars and trucks or generally any type of defined space or zone, i.e. a detection sphere. Also, the invention can be used for indoor and outdoor alarms, industrial robot control, home automation control, detection for actuating light when someone enters a room, automatic door openers and other applications in which there is a need for reliable and cost-effective detection of the presence of a human or animal in a detection sphere.

A basic principle behind the invention is that he transmitter is pulsed on-off in order to produce short bursts of radio energy in the microwave range, with a particular pulse repetition frequency (PRF). The receiver is also pulsed to receive microwave radiation reflected from an object of interest, but only during a certain interval determined in relation to the active state of the transmitter.

According to alternative embodiments of the invention, any of the first, second and third comparators 10, 13, 18 can be omitted. In such case, high-quality components must be used in the circuits of the transmitter and receiver unit in order to obtain a desired degree of accuracy. If one or more of the comparators are omitted, the corresponding pulse length detector can also be omitted.

## Claims

1. A method for presence control within a predetermined detection volume (4) using an arrangement (2) for transmitting and receiving microwave radiation, said method comprising:
periodically actuating a microwave transmitter (6);
detecting microwave radiation within said detection volume (4) by means of a microwave receiver (15); and
determining whether a living human (5) or animal is present in said detection volume (4) based on the properties of the microwave radiation being received by said microwave receiver (15);
**characterized in that** said method furthermore comprises:
periodically actuating said microwave receiver (15);
bringing said receiver (15) to enter an active state a predetermined time period (L_{T2}) after said transmitter (6) enters a non-active state, and
said predetermined time period (L_{T2}) corresponding to a time period for emitted microwave radiation to reach the outer perimeter (4a) of the detection volume (4) and to reach said receiver (15) if reflected by said human (5) or animal.

2. Method according to claim 1, **characterized in that** it comprises:
periodically actuating the microwave transmitter (6) by means of a sequence of first pulses (19) each having a predetermined first pulse length (L_{T1}) and being generated by means of a first pulse generator (8);
periodically actuating the microwave receiver (15) by means of a sequence of further pulses (21) each having a predetermined pulse length (L_{T3});
said further pulses (21) entering an active state said predetermined time period (L_{T2}) after said first pulses (19) enter a non-active state.

3. Method according to claim 1 or 2, **characterized in that** it comprises determining whether said human (5) or animal is present by means of a Doppler motion sensor process.

4. Method according to claim 3, **characterized in that** it comprises:
controlling the length of said first pulses (19) by means of a first pulse length detector (9); and
controlling the length of said further pulses (21) by means of a further pulse length detector (17).

5. Method according to claim 4, **characterized in that** it comprises:
providing a measurement by said first pulse length detector (9) which is fed to a first comparator (10) which is controlled with a first target pulse length (L_{T1}); and
providing a measurement by said first further pulse length detector (17) which is fed to a further comparator (18) which is controlled with a further target pulse length (L_{T3}).

6. Method according to any of the preceding claims, **characterized in that** it comprises:
defining said predetermined time period (L_{T2}) by means of an additional pulse length generator (11) which is controlled by said first pulse generator (8) and furthermore connected to said further pulse generator (14).

7. A system for presence control within a predetermined detection volume (4) comprising a microwave-based transmitting and receiving unit (2), said system also comprising:
a first pulse length generator (8) for periodically actuating a microwave transmitter (6);
a microwave receiver (15) for detecting microwave radiation within said detection volume (4), said microwave receiver (15) being arranged for determining whether a living human (5) or animal is present in said detection volume (4) based on the microwave radiation being received; **characterized in that** it comprises a further pulse generator (14) adapted for periodically actuating said microwave receiver (15) by means of a sequence of further pulses (21) each having a predetermined pulse length (L_{T3}) and for setting further pulses (21) in an active state a predetermined time period (L_{T2}) after said first pulses (19) enter a non-active state, wherein said predetermined time period (L_{T2}) corresponds to a time period for emitted microwave radiation to reach the outer perimeter (4a) of the detection volume (4) and to reach said receiver (15) if reflected by said human (5) or animal.
